# EUROPEAN PATENT APPLICATION

(11) **EP 4 567 187 A1**
(43) Date of publication of application: **11.06.2025**
(21) Application number: 23849775.4
(22) Date of filing: 20.06.2023
(51) Int. Cl.: D06N 3/00, B60N 2/58, B60R 13/02, D01F 6/62, D06N 3/14

(54) **ARTIFICIAL LEATHER, PRODUCTION METHOD FOR SAME, VEHICLE INTERIOR MATERIAL, AND SEAT**

(30) Priority: 03.08.2022 JP 2022123785
(71) Applicant: Toray Industries, Inc., Tokyo 103-8666 (JP)
(72) Inventor: KAJIWARA, Kentaro, Otsu-shi, Shiga 520-8558 (JP); YAMANAKA, Hirofumi, Otsu-shi, Shiga 520-8558 (JP)
(74) Representative: Mewburn Ellis LLP
(86) International application number: PCT/JP2023/022741
(87) International publication number: WO 2024/029215

(57) **Abstract**

The present invention relates to an artificial leather including, as a main constituent, fibers that are composed of a polyester resin and have an average single-fiber diameter of 2.0 µm to 7.0 µm, in which the fibers are long fibers and dispersed as single fibers, and the artificial leather has a heat of fusion ΔHm of 10 J/g to 100 J/g and exhibits a melting peak with a half width of 9°C or more. Provided are: an artificial leather that achieves an elegant and luxurious outer appearance and mechanical properties both at high levels; and a method of producing an artificial leather, by which the productivity can be improved while further reducing the environmental load.

## Description

### Technical Field

The present invention relates to: an artificial leather having an elegant outer appearance and excellent physical properties, and a method of producing the same; and a vehicle interior material and a seat, which include the artificial leather.

### Background Art

Artificial leathers whose surfaces are covered with naps formed of ultrafine fibers have elegant outer appearance and are thus used in a wide range of fields, including clothing, furniture, and automobile interior materials. Such artificial leathers achieve high levels of outer appearance and physical properties as uniform sheets obtained by a method of laminating webs composed of ultrafine fiber-generating stapes in a cross-layered manner.

However, in recent years, not only there is an increasing demand for higher levels of outer appearance and physical properties, but also process simplification is demanded with rising environmental consciousness.

For example, Patent Literature 1 proposes an ultrafine polyester drawn fiber for papermaking that has a fineness of 0.5 dtex or less and a specific fiber length, the fiber being characterized in that a polyether-polyester copolymer is adhered to the fiber surface in a certain amount based on the fiber weight, and the fiber has a moisture retention rate of a certain value or higher.

Further Patent Literature 2 proposes a method of producing a substrate for artificial leathers, which method includes: the step of preparing a fiber web from ultrafine fiber-generating fibers that can generate ultrafine fibers having an average single-fiber fineness of 0.5 dtex or less; the step of arranging a brush belt such that a tip of a brush comes into contact with at least one surface of the fiber web, and needle-punching the fiber web while holding the ultrafine fiber-generating fibers protruding from the fiber web in the brush to obtain an entangled nonwoven fabric; the step of adding an elastic polymer into the entangled nonwoven fabric; and the step of converting the ultrafine fiber-generating fibers into fiber bundles of ultrafine fibers having an average single-fiber fineness of 0.5 dtex or less.

Moreover, Patent Literature 3 proposes a method of producing a suede-like artificial leather, the method being characterized in that, in the production of an artificial leather by filling the voids of a nonwoven fabric, which is produced by spraying a high-speed fluid flow to a nonwoven web containing ultrafine fibers of 0.5 deniers or less as an indispensable component or a composite sheet in which a knitted fabric is laminated on the back surface or inner layer of the nonwoven web and subsequently entangling the constituent fibers, or the voids of a nonwoven fabric-like material having at least one nonwoven fabric layer surface with an elastic polymer, the nonwoven fabric or the nonwoven fabric layer surface of the nonwoven fabric material is subjected to a napping treatment, and the thus napped surface is then coated with a paste preventing the filling with the elastic polymer, after which the voids are filled with the elastic polymer and the paste is subsequently removed.

### Citation List

### Patent Literature

[Patent Literature 1] JP 2002-339257A
[Patent Literature 2] WO 2006/134966
[Patent Literature 3] JP S55-084479A

### Summary of Invention

### Technical Problem

For example, in those cases where the technology disclosed in Patent Literature 1 is used for a substrate of an artificial leather or an artificial leather is obtained by the ultrafine fiber papermaking process disclosed in Patent Literature 3, it is thought that the process can be more easily simplified than that of a conventional artificial leather in that it does not require the step of generating ultrafine fibers. However, it is necessary to shorten the length of fibers in order to uniformly disperse the fibers in water, and this makes it difficult to obtain an artificial leather having an elegant and luxurious outer appearance and high physical properties. Further, in order to prevent the fibers from entangling with each other in water, the fibers need to be rigid. Therefore, it is also difficult to soften the touch of naps.

On the other hand, according to the production process based on a spunbonding method disclosed in Patent Literature 2 and the production process based on a melt-blow method disclosed in Patent Literature 3, it is also thought that the process can be more easily simplified than that of a conventional artificial leather in that the process can omit the step of forming a web from crimped staples that are generally used in the production of an artificial leather. Further, unlike the technology disclosed in Patent Literature 1 and the ultrafine fiber papermaking process disclosed in Patent Literature 3, dispersion in water is not required; therefore, it is thought that the rigidity of fibers can be easily kept low, and an artificial leather having soft-touch naps can be relatively easily obtained. However, in the technology disclosed in Patent Literature 2, since ultrafine fiber-generating fibers are used, ultrafine fibers generated from the same ultrafine fiber-generating fiber are likely to aggregate with each other and form fiber bundles, and this makes it difficult to obtain a sheet having a uniform outer appearance in which fibers are dispersed separately from each other. Further, in the melt-blow method disclosed in Patent Literature 3, since the rigidity of fibers is excessively reduced, the resulting artificial leather lacks firmness in touch, and it is difficult to obtain sufficient physical properties.

In view of the above, an object of the present invention is to provide: an artificial leather that achieves an elegant and luxurious outer appearance and mechanical properties both at high levels; and a method of producing an artificial leather, by which the productivity can be improved while further reducing the environmental load.

### Solution to Problem

In order to solve the above-described problems, the present invention has the following constitution.
[1] An artificial leather, including, as a main constituent, fibers that are composed of a polyester resin and have an average single-fiber diameter of 2.0 µm to 7.0 µm,
   wherein
   the fibers are long fibers and dispersed as single fibers, and
   the artificial leather has a heat of fusion ΔHm of 10 J/g to 100 J/g, and exhibits a melting peak with a half width of 9°C or more.
[2] The artificial leather according to [1], having naps on at least one surface.
[3] The artificial leather according to [1] or [2], further including, as a constituent, a layer formed of reinforcing fibers having an average single-fiber diameter of 5.0 µm to 25.0 µm.
[4] The artificial leather according to any one of [1] to [3], further including a polyurethane as a constituent,
   wherein a content ratio of the polyurethane is 5% by mass to 50% by mass.
[5] The artificial leather according to any one of [1] to [3], wherein the fibers have a cross-sectional shape irregularity of 1.00 to 1.15.
[6] A method of producing the artificial leather according to any one of [1] to [5], the method including the steps of:
   discharging a molten polyester resin from discharge holes of a spinneret at a single-hole discharge rate of 0.05 g/min to 0.30 g/min, and subsequently blowing a - 15°C to 50°C gas to the polyester resin in at least a part of a region within 200 mm from the discharge holes to form a yarn; and
   drawing the yarn with a -15°C to 50°C gas at a spinning speed Vs (m/min) of 3,000 m/min to 7,000 m/min at least at an inlet to obtain a web composed of fibers having an average single-fiber diameter of 2.0 µm to 7.0 µm.
[7] The method according to [6], wherein a ratio Vq/Vs between a gas flow rate Vq (m/min) at the time of blowing the gas and the spinning speed Vs (m/min) is 3 × 10⁻³ to 30 × 10⁻³.
[8] The method according to [6] or [7], wherein the distance between the discharge holes and the inlet is 100 mm to 3,000 mm.
[9] The method according to any one of [6] to [8], wherein the discharge holes have a hole diameter of 0.05 mm to 0.30 mm.
[10] A vehicle interior material, including the artificial leather according to any one of [1] to [5].
[11] A seat, including the artificial leather according to any one of [1] to [5]. Advantageous Effects of Invention

According to the artificial leather of the present invention, an elegant and luxurious outer appearance and mechanical properties can be achieved both at high levels. Further, according to the method of producing the artificial leather of the present invention, the productivity can be improved while further reducing the environmental load. Moreover, the artificial leather, because of its excellent properties, can be suitably used particularly in a vehicle interior material or a seat.

### Brief Description of the Drawings

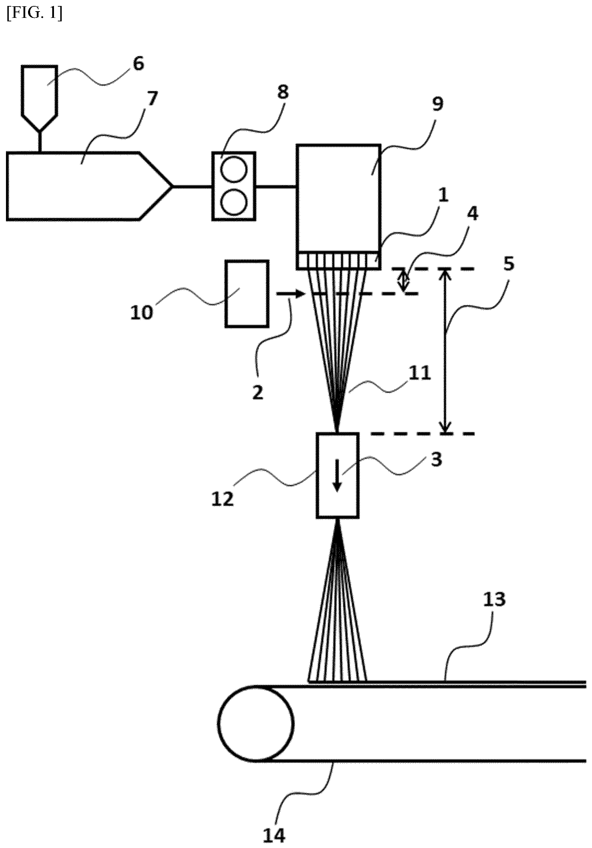

[FIG. 1] FIG. 1 is a conceptual cross-sectional drawing that illustrates one embodiment of a production apparatus relating to the artificial leather of the present invention.

### Description of Embodiments

The artificial leather of the present invention is an artificial leather including, as a main constituent, fibers that are composed of a polyester resin and have an average single-fiber diameter of 2.0 µm to 7.0 µm. In this artificial leather, the fibers are long fibers and dispersed as single fibers, and the artificial leather has a heat of fusion (ΔHm) of 10 J/g to 100 J/g. The constituents of the artificial leather will now be described in detail; however, the present invention is not limited to the below-described scope by any means within the gist of the present invention, and various modifications can be made without departing from the gist of the present invention.

The phrase "including, as a main constituent, fibers..." used herein means that a portion of the artificial leather, from which a layer formed of the below-described reinforcing fibers and a polyurethane are excluded, contains the fibers at a mass ratio of not less than 50% by mass.

The term "long fiber" used herein means a substantially continuous fiber that is not a short fiber intentionally cut after spinning and has a fiber length of 100 mm or more. More specifically, the term "long fiber" means, for example, a fiber that is not a short fiber intentionally cut to a fiber length of about 3 to 80 mm. However, in the production process of the artificial leather, fibers that are cut after a polyester resin is spun and made into a sheet, for example, fibers at an end formed by slitting the sheet and surface fibers generated by formation of naps on the sheet surface are regarded as long fibers even if they are cut to a certain length.

Further, the phrase "dispersed as single fibers" used herein refers to a state where a fiber bundle, in which a large number of fibers are assembled into a thick fiber, is absent on the surface. This state can be verified by observation under a stereomicroscope or an electron microscope, specifically by observing randomly selected 1 cm × 1 cm regions, and counting the number of fiber bundles that are each assembled by 10 or more fibers and continuous over a length of at least 1 mm. The number of such fiber bundles is counted in the same manner for 10 regions and, when the average value thereof is 3 or less, the fibers are judged to be "dispersed as single fibers".

### [Fiber]

The artificial leather of the present invention includes, as a main constituent, fibers composed of a polyester resin. This allows the artificial leather to not only achieve an elegant and luxurious outer appearance and mechanical properties both at high levels, but also exhibit excellent durability.

Examples of the polyester resin include polyethylene terephthalate, polytrimethylene terephthalate, polybutylene terephthalate, polylactic acid, and polyester elastomers. Thereamong, from the standpoint of the texture and the practical performance of a processed product, a polyethylene terephthalate or a polybutylene terephthalate is more preferably used, and a polyethylene terephthalate is particularly preferably used.

In the present invention, the "polyester resin" refers to any of the above-exemplified polyester resins such as polyethylene terephthalate, a mixture or copolymer thereof, or a resin obtained by adding additives thereto. The additives are added and incorporated in accordance with various purposes within a range that does not hinder the object of the present invention, and specific examples of the additives include inorganic particles such as titanium oxide particles, lubricants, pigments, heat stabilizers, UV absorbers, conductive agents, heat storage agents, and antibacterial agents.

In the artificial leather of the present invention, the fibers have an average single-fiber diameter of 2.0 µm to 7.0 µm. When the average single-fiber diameter is outside this range, a soft and smooth touch is not obtained, and the shape of a nonwoven fabric is not stable, resulting in poor ease of handling. By controlling a lower limit of the range of the average single-fiber diameter to be preferably 2.5 µm or more, more preferably 3.0 µm or more, the shape stability of the artificial leather is further improved. Meanwhile, by controlling an upper limit of the range of the average single-fiber diameter to be preferably 6.0 µm or less, more preferably 5.0 µm or less, the flexibility of the artificial leather is further improved.

In the artificial leather of the present invention, the average single-fiber diameter (µm) refers to a value determined in the following manner.
(1) Five 2 cm × 2 cm test pieces are cut out.
(2) A cross-section of each test piece is photographed under a scanning electron microscope ("VHX-D510" manufactured by KEYENCE Corporation , or one having equivalent performance).
(3) Twenty fibers having a circular cross-section or an elliptical cross-section that is substantially circular are randomly selected.
(4) The single-fiber diameter is measured for these twenty fibers.
(5) The operations of (2) to (4) are performed for all of the test pieces, and an arithmetic mean value (µm) of the thus measured single-fiber diameter is calculated and rounded off to one decimal place.

In the artificial leather of the present invention, the above-described fibers are long fibers. This is because, when the fibers are long fibers, not only a high strength is likely to be obtained but also the fibers are unlikely to be dislodged from the artificial leather, so that good abrasion resistance is obtained.

Further, in the artificial leather of the present invention, the above-described fibers are dispersed as single fibers. When the ultrafine fibers constituting the artificial leather are dispersed as single fibers, the artificial leather has a uniform structure as a whole, and thus can obtain a luxurious outer appearance.

Generally, in an artificial leather using ultrafine fiber-generating fibers, the ultrafine fiber-generating fibers are not dispersed as single fibers since, as a result of structural formation by entanglement and the like, plural ultrafine fibers contained in the ultrafine fiber-generating fibers form fiber bundles in an ultrafine fiber-generating treatment. When a structure is formed by such fiber bundles, entangled parts and the surface tend to be formed based on the size of the fiber bundles; therefore, such a uniform structure as desired in the present invention cannot be easily obtained. Further, depending on the case, a clear lighting effect cannot be obtained, and this leads to poor quality.

Even if the artificial leather partially contains a structure in which the fibers are entangled in the state of fiber bundles due to the production constraints and the like, it is acceptable as long as the ultrafine fibers constituting the artificial leather are substantially dispersed as short fibers, and the content ratio of the structure in which the fibers are entangled in the state of fiber bundles is in a range that does not hinder the effects of the present invention. However, caution needs to be taken since the effects of the present invention may not be sufficiently obtained.

In the artificial leather of the present invention, the above-described fibers preferably have a cross-sectional shape irregularity of 1.00 to 1.15. When a lower limit of this shape irregularity is 1.00, the cross-sections of the fibers are perfectly circular, and an increase in the shape irregularity indicates a further deformation of the cross-sections of the fibers from a perfectly circular shape in different directions. By controlling an upper limit of the range of the shape irregularity to be more preferably 1.10 or less, still more preferably 1.05 or less, the anisotropy in bending of the fibers is further suppressed; therefore, when naps are formed on the surface of the artificial leather, the naps are likely to be uniformly arranged, so that the artificial leather can be provided with a luxurious feel.

In the artificial leather of the present invention, the shape irregularity refers to a value determined in the following manner.
(1) Five 2 cm × 2 cm test pieces are cut out. In the case of cutting out the test pieces from a product in which the artificial leather is used, the test pieces are randomly collected from a portion excluding the seams and embossed parts of the product.
(2) A cross-section of each test piece is photographed under a scanning electron microscope ("VHX-D510" manufactured by KEYENCE Corporation, or one having equivalent performance).
(3) Ten fibers are randomly selected and, in order to observe the exact cross-sectional shape of each fiber, the thus selected fibers are photographed, adjusting the direction to eliminate or minimize the reflection of the side surface of each fiber.
(4) For the cross-sections of the selected fibers, the shape irregularity (no unit) is determined by dividing the diameter (µm) of a minimum circumscribed circle of each cross-section by the diameter (µm) of a maximum inscribed circle of the cross-section.
(5) The operations of (2) to (4) are performed for all of the test pieces, and an arithmetic mean value (no unit) of the thus obtained shape irregularity is calculated and rounded off to two decimal places.

### [Artificial Leather]

The artificial leather of the present invention includes the above-described fibers as a main constituent. Further, the artificial leather of the present invention has a heat of fusion ΔHm of 10 J/g to 100 J/g. In the present invention, the "heat of fusion ΔHm" refers to the heat of fusion ΔHm that is derived from a polyester, and a larger heat of fusion ΔHm indicates a higher crystallinity of the resin constituting the fibers. As described below, the heat of fusion in the present invention is measured and calculated based on the mass of the fibers composed of a polyester resin in the artificial leather. Even when the fibers contain a polyurethane or the like, the measurement is performed in the state of an artificial leather, and the heat of fusion is measured and calculated based on the mass of the fibers composed of the polyester resin in the artificial leather, excluding the content of the polyurethane. When the heat of fusion ΔHm of the artificial leather is outside the range of 10 J/g to 100 J/g, since an improvement in the mechanical properties of the fibers is not expected, fiber breakage and fluff generation occur, or an artificial leather that is flexible and soft in touch cannot be obtained.

By controlling a lower limit of the range of the heat of fusion ΔHm to be preferably 20 J/g or more, more preferably 30 J/g or more, the resin constituting the fibers is further crystallized; therefore, the mechanical properties of the fibers are further improved, and fiber breakage and fluff generation are inhibited. As a result, the artificial leather can exhibit superior mechanical properties. Meanwhile, by controlling an upper limit of the range of the heat of fusion ΔHm to be preferably 60 J/g or less, more preferably 45 J/g or less, excessive crystallization is inhibited; therefore, the artificial leather can be more flexible and softer in touch.

In the artificial leather of the present invention, the heat of fusion ΔHm refers to a value that is measured and calculated in the following manner.
(1) Five 2 cm × 2 cm test pieces are cut out. In the case of cutting out the test pieces from a product in which the artificial leather is used, the test pieces are randomly collected from a portion excluding the seams and embossed parts of the product, and then adjusted to a standard state having a temperature of 20 ± 2°C and a relative humidity of 65 ± 4% before use.
(2) Using a differential scanning calorimeter ("Q20" manufactured by TA Instruments Japan Inc., or one having equivalent performance), the temperature is raised from 20°C to 300°C at a rate of 10°C/min, and the heat of fusion (J) is measured from the heat balance of a melting peak between 200°C and 300°C. In this process, when there is an exothermic peak between 100°C and 200°C, a value obtained by subtracting the calorific value (J) thereof from the above-measured heat of fusion (J) is adopted as heat of fusion (J).
(3) The heat of fusion (J) is divided by the mass (g) of the fibers composed of the polyester resin to determine the heat of fusion ΔHm. In this process, when the artificial leather contains a component other than the polyester resin, such as a polyurethane, the artificial leather is immersed in a solvent that elutes ultrafine fibers (fibers having an average single-fiber diameter of 2.0 µm to 7.0 µm that are contained in the artificial leather) and the below-described reinforcing fibers, or a solvent that elutes the polyurethane, and the heat of fusion ΔHm is calculated from a change in mass before and after elution. For example, in the case of an artificial leather containing an organic solvent-based polyurethane, the artificial leather is often immersed in *N*,*N'*-dimethylformamide to dissolve and remove the polyurethane, and the mass of the remaining ultrafine fibers and reinforcing fibers is subsequently measured to calculate the mass of the fibers composed of the polyester resin.
(4) The operations of (2) and (3) are performed for all of the test pieces, and an arithmetic mean of the thus measured heat of fusion ΔHm (J/g) is calculated and rounded off to the nearest whole number.

The heat of fusion ΔHm can be controlled in the above-described range by adjusting, for example, the spinning speed, the spinning temperature, the cooling conditions, the molecular weight of the polyester resin, the types and the copolymerization ratio of the copolymerization components of the polyester resin, and the type and the amount of an additive such as a crystal nucleating agent.

The artificial leather of the present invention exhibits a melting peak with a half width of 9°C or more. In the present invention, the "melting peak" refers to a melting peak derived from polyester and, the larger the half width of the melting peak, the more likely is the artificial leather to have satisfactory physical properties and a soft touch. When the half width of the melting peak of the artificial leather is less than 9°C, the artificial leather cannot be flexible and soft in touch.

By controlling a lower limit of the half width of the melting peak to be preferably 11°C or more, more preferably 13°C or more, the artificial leather can be made more flexible and softer in touch. An upper limit is not particularly limited; however, it is preferably 20°C or less, more preferably 18°C or less, still more preferably 16°C or less, since this is likely to improve the mechanical properties of the fibers.

In the present invention, the half width of the melting peak is a value obtained at the same time with the above-described measurement of the heat of fusion. Specifically, it is a value obtained by reading the half width (°C) of the melting peak between 200°C and 300°C in the step (2) of the measurement of the heat of fusion.

The half width of the melting peak can be controlled in the above-described range by, for example, adjusting the spinning speed, the spinning temperature, the cooling conditions, the molecular weight of the polyester resin, and the copolymerization components of the polyester resin, and adding an additive such as a crystal nucleating agent.

The artificial leather of the present invention is characterized in that it achieves an elegant and luxurious outer appearance and mechanical properties both at high levels, and that the productivity thereof can be improved while further reducing the environmental load. The artificial leather of the present invention can assume various outer appearances, such as a full-grain appearance with nap-free surface, and a napped suede-like or nubuck-like appearance. Particularly, it is a preferred mode that the artificial leather of the present invention has naps on at least one surface. In the present invention, a surface that "has naps" refers to a surface that has a napped layer formed of ultrafine fibers having a length and a directional flexibility to such an extent that a so-called finger mark appears when the surface is traced with a finger.

The artificial leather of the present invention is composed of long fibers and is thus characterized by having relatively high physical properties; however, in order to obtain higher physical properties, the artificial leather of the present invention preferably further includes, as a constituent, a layer formed of reinforcing fibers having an average single-fiber diameter of 5.0 µm to 25.0 µm.

With regard to the reinforcing fibers, when an upper limit of the range of the average single-fiber diameter is preferably 25.0 µm or less, more preferably 15.0 µm or less, still more preferably 13.0 µm or less, the artificial leather can be provided with excellent flexibility. Meanwhile, when a lower limit of the range of the average single-fiber diameter is preferably 5.0 µm or more, more preferably 7.0 µm or more, still more preferably 10.0 µm or more, the product shape stability of the artificial leather is improved.

In the present invention, the average single-fiber diameter of the reinforcing fibers is determined by: taking a scanning electron microscope (SEM) image of a cross-section of the artificial leather; randomly selecting 10 reinforcing fibers constituting a layer formed of reinforcing fibers; calculating an arithmetic mean value (µm) of the single-fiber diameter measured for the 10 fibers; and rounding off the thus obtained value to one decimal place. It is noted here that, when fibers having an irregular cross-sectional shape are used, the cross-sectional area (µm²) of each fiber is measured first in the same manner as in the measurement and calculation of the average single-fiber diameter of the fibers constituting the artificial leather, and the diameter (µm) of the fiber is determined by calculating the diameter assuming that the cross-section is circular, i.e. circle equivalent diameter. Further, when the reinforcing fibers are the below-described multifilaments, the diameter of single fibers constituting the multifilaments is defined as the average single-fiber diameter of the reinforcing fibers.

Examples of the layer formed of reinforcing fibers include a woven fabric layer. The basic structure of this woven fabric layer may be a twill structure or a satin structure; however, a plain weave structure in which distortion and the like are unlikely to occur can be preferably used.

As for the type of the fibers constituting the woven fabric layer, it is preferred to use a filament yarn, a spun yarn, a mixed composite yarn of a filament yarn and a spun yarn, or the like and, from the standpoint of durability, particularly mechanical strength and the like, it is more preferred to use a multifilament composed of a polyester resin or a polyamide resin.

Further, when the fibers constituting the above-described woven fabric layer are multifilaments, the multifilaments preferably have a twist count of 1,000 T/m to 4,000 T/m. By controlling an upper limit of the range of the twist count to be 4,000 T/m or less, preferably 3,500 T/m or less, more preferably 3,000 T/m or less, the artificial leather can be provided with excellent flexibility. Meanwhile, by controlling a lower limit of the range of the twist count to be 1,000 T/m or more, preferably 1,500 T/m or more, more preferably 2,000 T/m or more, damage to the fibers constituting the woven fabric can be prevented at the time of entangling and integrating the woven fabric with a nonwoven fabric by needle-punching or the like, so that the artificial leather is provided with excellent mechanical strength, which is preferred.

For the purpose of adjusting the texture and the physical properties, a polyurethane is preferably further incorporated into the artificial leather of the present invention as a constituent. As the polyurethane, a polyurethane obtained by a reaction of a polymer diol, an organic diisocyanate, and a chain extender is preferably used.

As the polymer diol used in the polyurethane according to the present invention, at least one polymer diol having an average molecular weight of 500 to 3,000 that is selected from polymer diols such as polyester diols, polyether diols, polycarbonate diols, and polyester polyether diols can be used; however, the polyurethane preferably contains a polyether diol or a polycarbonate diol that has excellent hydrolysis resistance and is unlikely to lose its function as a binder against repeated washing.

Further, the polyurethane according to the present invention may also contain various additives depending on the intended purpose, and examples thereof include: pigments, such as carbon black; flame retardants, such as phosphorus-based flame retardants, halogen-based flame retardants, and inorganic flame retardants; antioxidants, such as phenolic antioxidants, sulfur-based antioxidants, and phosphorus-based antioxidants; UV absorbers, such as benzotriazole-based, benzophenone-based, salicylate-based, cyanoacrylate-based, and oxalic acid anilide-based UV absorbers; light stabilizers, such as hindered amine-based light stabilizers and benzoate-based light stabilizers; hydrolysis stabilizers, such as polycarbodiimide; plasticizers; antistatic agents; surfactants; coagulation regulators; and dyes.

Generally, the content ratio of a polyurethane in an artificial leather can be adjusted as appropriate taking into consideration, for example, the type of the polyurethane used, the production method of the polyurethane, and the texture and the physical properties of the desired artificial leather. In the artificial leather of the present invention, the content ratio of the polyurethane is preferably 5% by mass to 50% by mass. When a lower limit of the range of the content ratio of the polyurethane is 5% by mass or more, more preferably 10% by mass or more, the abrasion resistance of the artificial leather can be improved. Meanwhile, when an upper limit of the range of the content ratio of the polyurethane is 50% by mass or less, preferably 40% by mass or less, more preferably 30% by mass or less, the flexibility of the artificial leather can be further increased.

In the present invention, the content ratio of the polyurethane in the artificial leather refers to a value that is measured and calculated by the following method.
(1) Five 2 cm × 2 cm test pieces are cut out, and the mass of each test piece is measured. In the case of cutting out the test pieces from a product in which the artificial leather is used, the test pieces are randomly collected from a portion excluding the seams and embossed parts of the product, and then adjusted to a standard state having a temperature of 20 ± 2°C and a relative humidity of 65 ± 4% before use.
(2) The artificial leather is immersed in a solvent that elutes ultrafine fibers and reinforcing fibers, or a solvent that elutes the polyurethane, and the content (g) of the polyurethane is calculated from a change in mass before and after elution. For example, in the case of an artificial leather containing an organic solvent-based polyurethane, the artificial leather is often immersed in *N*,*N'*-dimethylformamide to dissolve and remove the polyurethane, and the mass of the remaining ultrafine fibers and reinforcing fibers is subsequently measured to calculate the content (g) of the polyurethane.
(3) The content of the polyurethane determined in (2) is divided by the mass (g) of the test piece measured in (1) to calculate the content ratio (% by mass) of the polyurethane.
(4) The operations of (2) and (3) are performed for all of the test pieces, and an arithmetic mean value (% by mass) of the thus obtained content ratio (% by mass) of the polyurethane is calculated and rounded off to the nearest whole number.

### [Method of Producing Artificial Leather]

A method of producing the artificial leather of the present invention includes the steps of: discharging a molten polyester resin from discharge holes of a spinneret at a single-hole discharge rate of 0.05 g/min to 0.30 g/min, and subsequently blowing a -15°C to 50°C gas to the polyester resin in such a manner to include at least a part of a region within 200 mm from the discharge holes so as to form a yarn; and drawing the yarn with a -15°C to 50°C gas at a spinning speed of 3,000 m/min to 7,000 m/min at least at an inlet to obtain a web composed of fibers having an average single-fiber diameter of 2.0 µm to 7.0 µm. In the present invention, the "inlet" is a place where the velocity of the drawing gas is the highest between the discharge holes and the web being formed, and it is generally a spot where the cross-sectional area of a passage through which the resin discharged from the discharged holes pass in the form of a yarn between the discharge holes and the web being formed. This production method will now be described in detail. Needless to say, in the following as well, the present invention is not limited to the below-described scope by any means within the gist of the present invention, and various modifications can be made without departing from the gist of the present invention.

In method of producing the artificial leather of the present invention, first, a molten polyester resin is discharged from discharge holes of a spinneret at a single-hole discharge rate of 0.05 g/min to 0.30 g/min. When the single-hole discharge rate is outside the range of 0.05 g/min to 0.30 g/min, stable spinnability cannot be obtained in the below-described range of spinning speed, or fibers having an average single-fiber diameter of 7.0 µm or less, which are used for obtaining an artificial leather having an elegant outer appearance, cannot be easily obtained. The term "single-hole discharge rate (g/min)" used herein refers to the amount (g) of polyester resin discharged from one discharge hole (single hole) of a spinneret per unit time (min). By controlling a lower limit of the range of this single-hole discharge rate to be preferably 0.07 g/min or more, more preferably 0.09 g/min, more stable spinnability can be obtained in the below-described range of spinning speed. Meanwhile, by controlling an upper limit of the range of the single-hole discharge rate to be preferably 0.25 g/min or less, more preferably 0.20 g/min or less, fibers having an average single-fiber diameter of 7.0 µm or less, which are used for obtaining an artificial leather having an elegant outer appearance, can be more easily obtained in the below-described range of spinning speed.

In this process, the discharge holes preferably have a hole diameter of 0.05 mm to 0.30 mm. By controlling a lower limit of the range of the hole diameter to be more preferably 0.07 mm or more, still more preferably 0.09 mm or more, deterioration of the spinnability over time due to adhesion of dirt and the like can be effectively inhibited. Meanwhile, by controlling an upper limit of the range of the hole diameter to be more preferably 0.25 mm or less, still more preferably 0.20 mm or less, a stable spinning state can be more easily obtained. In the present invention, when the discharge holes do not have a perfectly circular shape, the diameter of a perfect circle having the same hole area (circle equivalent diameter) is referred to as "hole diameter".

In the method of producing the artificial leather of the present invention, after the discharge of a molten polyester resin from the discharge holes of a spinneret, a - 15°C to 50°C gas is blown to at least a part of a region within 200 mm from the discharge holes to form a yarn. When obtaining fibers of normal fineness, it is generally avoided to blow a gas at a position close to the discharge holes since this tends to affect the temperature of the discharge holes and destabilize the spinning; however, as a result of studies, the present inventors discovered that, in spinning for obtaining ultrafine fibers, the spinning is stabilized by blowing a gas at a position close to the discharge holes.

The region to which the gas is blown includes at least a part of a region within 200 mm from the discharge holes. When at least a part of a region within 200 mm from the discharge holes is not included, it is difficult to obtain fibers having an average single-fiber diameter of 7.0 µm or less; therefore, an artificial leather having an elegant outer appearance cannot be obtained. The region to which the gas is blown preferably includes at least a part of a region within 150 mm from the discharge holes, more preferably includes at least a part of a region within 100 mm from the discharge holes. By blowing the gas in this manner, fibers having an average single-fiber diameter of 7.0 µm or less, which are normally difficult to obtain, are easily obtained, so that an artificial leather having an elegant outer appearance can be more easily obtained.

When the temperature of the blown gas is outside the range of -15°C to 50°C, the temperature in the vicinity of the discharge holes is excessively lowered, or the discharged polyester resin cannot be sufficiently cooled. By controlling a lower limit of the temperature range of the gas to be preferably -10°C or higher, more preferably -5°C or higher, an excessive decrease in the temperature in the vicinity of the discharge holes can be effectively inhibited. Meanwhile, by controlling an upper limit of the temperature range of the gas to be preferably 40°C or lower, more preferably 30°C or lower, the discharged polyester resin can be cooled more sufficiently.

Examples of a gas supply means used for blowing the gas include a method of supplying the gas to the polyester resin from one or multiple directions using a blower through a slit nozzle or a rectifier unit.

Further, in the method of producing the artificial leather of the present invention, the distance between the discharge holes and the inlet is preferably 100 mm to 3,000 mm. By controlling a lower limit of the range of the distance between the discharge holes and the inlet to be preferably 100 mm or more, more preferably 200 mm or more, still more preferably 300 mm or more, the fiber formation of the molten polyester resin can be sufficiently facilitated, so that stable spinning can be performed more easily. Meanwhile, by controlling an upper limit of the range of the distance between the discharge holes and the inlet to be preferably 3,000 mm or less, more preferably 2,000 mm or less, still more preferably 1,000 mm or less, a yarn composed of the polyester resin discharged from plural discharge holes can be more stably guided to the inlet.

Moreover, in the method of producing the artificial leather of the present invention, the spinning speed Vs (m/min) of the yarn is 3,000 m/min to 7,000 m/min at least at the inlet. When the spinning speed Vs (m/min) is outside the range of 3,000 m/min to 7,000 m/min, a moderately firm touch cannot be obtained due to insufficient molecular orientation, and an artificial leather excellent in mechanical properties and shape stability cannot be obtained, or the yarn blown with the gas cannot be drawn in a stable manner. By controlling a lower limit of the range of the spinning speed Vs (m/min) to be preferably 3,500 m/min or more, more preferably 4,000 m/min or more, not only the molecules are more sufficiently oriented and a moderately firm touch is obtained, but also an artificial leather excellent in mechanical properties and shape stability can be obtained more easily. Meanwhile, by controlling an upper limit of the range of the spinning speed Vs (m/min) to be preferably 6,500 m/min or less, more preferably 6,000 m/min or less, the yarn blown with the gas can be drawn in a more stable manner.

In the present invention, the spinning speed Vs (m/min) at the inlet refers to a value that is measured and calculated by the following method.
(1) From a web collected on a net after drawing and stretching the above-described yarn, ten small samples are randomly collected, and their surfaces are photographed under a microscope at a magnification of ×500 to ×1,000. The width is measured for a total of 100 fibers, i.e. 10 fibers from each sample, and the single-fiber diameter (µm) is calculated from an arithmetic mean of the thus measured values.
(2) From the single-fiber diameter and the density of the resin in use at 20°C, the mass per length of 10,000 m is calculated as single-fiber fineness (dtex) and rounded off to one decimal place.
(3) From the single-fiber fineness (dtex) obtained in (2) and the single-hole discharge rate (g/min) set for each condition, the spinning speed is calculated based on the following equation and rounded off to the nearest whole number: Spinning speed (m/min) = (10,000 × single-hole discharge rate (g/min))/single-fiber fineness (dtex)

By controlling a lower limit of the temperature range of the gas used for drawing the yarn to be preferably -10°C or higher, more preferably -5°C or higher, the yarn can be cooled more uniformly. Meanwhile, by controlling an upper limit of the temperature range of the gas to be preferably 40°C or lower, more preferably 30°C or lower, the yarn can be cooled more sufficiently.

Furthermore, in the method of producing the artificial leather of the present invention, a ratio Vq/Vs between a gas flow rate Vq (m/min) at the time of blowing the gas and the spinning speed Vs (m/min) is preferably 3 × 10⁻³ to 30 × 10⁻³. By controlling a lower limit of the range of Vq/Vs to be preferably 3 × 10⁻³ or more, more preferably 4 × 10⁻³ or more, still more preferably 5 × 10⁻³ or more, the yarn can be sufficiently cooled. Meanwhile, by controlling an upper limit of the range of Vq/Vs to be preferably 30 × 10⁻³ or less, more preferably 20 × 10⁻³ or less, still more preferably 10 × 10⁻³ or less, the yarn can be drawn in a more stable manner.

By the above-described method, a web composed of fibers having an average single-fiber diameter of 2.0 µm to 7.0 µm can be obtained. In the method of producing the artificial leather of the present invention, the artificial leather is preferably produced by further performing at least one of the following steps:
(1) the step of further providing the above-described web with a layer formed of reinforcing fibers to obtain a sheet substrate;
(2) the step of shrinking the web or the sheet substrate by a dry heat treatment, a wet heat treatment, or a combination thereof to obtain a heat-treated sheet substrate;
(3) the step of adding a polyurethane to the web, the sheet substrate, or the heat-treated sheet substrate to obtain a polyurethane-attached sheet substrate;
(4) the step of performing a napping treatment on at least one surface of the web, the sheet substrate, the heat-treated sheet substrate, or the polyurethane-coated sheet substrate to form naps on the surface and thereby obtain a napped sheet; and
(5) the step of performing a post-processing on the web, the sheet substrate, the heat-treated sheet substrate, the polyurethane-attached sheet substrate, or the napped sheet.

It is noted here that, when none of the steps (1) to (5) is performed, the above-described web is an artificial leather. When only the step (1) is performed, the above-described sheet substrate is an artificial leather. Further, when only the step (2) or a combination of the steps (1) and (2) is performed, the above-described heat-treated sheet substrate is an artificial leather. Moreover, when only the step (3) or a combination of the steps (1) and (3), (2) and (3), or (1) to (3) is performed, the above-described polyurethane-attached sheet substrate is an artificial leather. The same applies to the napped sheet of the step (4). It is needless to say that the product of the step (5) is an artificial leather. These steps will now be described in detail.

First, in the step of obtaining a sheet substrate, it is also preferred to further provide the above-described web with a layer formed of reinforcing fibers. This "layer formed of reinforcing fibers" refers to a layer formed of the above-described reinforcing fibers having an average single-fiber diameter of 5.0 µm to 25.0 µm and, by providing the web with this layer formed of the reinforcing fibers, the artificial leather can be provided with superior physical properties. As a means for providing the layer formed of the reinforcing fibers, for example, a method of fusing this layer and the web with heat, a method of adhering the layer and the web with an adhesive, or a method of entangling the reinforcing fibers with the fibers constituting the web by needle punching, water jet punching, or the like may be employed. Particularly, it is a more preferred mode to employ water jet punching since the fibers constituting the web that have an average single-fiber diameter of 2.0 µm to 7.0 µm are thereby easily entangled with the reinforcing fibers.

In the present invention, in order to make the resulting artificial leather denser, it is also preferred to perform the step of shrinking the above-described web or sheet substrate by a dry heat treatment, a wet heat treatment, or a combination thereof to obtain a heat-treated sheet substrate. Specific examples of the dry heat treatment include blowing hot air. Specific examples of the wet heat treatment include immersion in heated water. It is also preferred to further perform a hot-press treatment on the sheet that has been subjected to the above-described treatments. In this manner, not only the sheet subjected to the dry heat treatment or the wet heat treatment can be made denser, but also the shape of the sheet can be fixed and the surface can be smoothened.

Next, in the step of obtaining a polyurethane-attached sheet substrate, a method of dissolving a polyurethane or its precursor in a solvent such as *N,N'-*dimethylformamide or dimethyl sulfoxide (solvent method) is preferably employed; however, a method using a water-dispersed polyurethane solution in which a mixture containing at least a polyurethane or its precursor, namely a polymer diol, an organic diisocyanate, and a chain extender, is dispersed in water as an emulsion (water dispersion method) may be preferably employed as well. In the case of the former solvent method, for example, a method in which the above-described web or the like is immersed in the polyurethane solution and then dried to substantially coagulate and solidify the polyurethane precursor, or a method in which the above-described web or the like is immersed in the polyurethane solution and then immersed in another solvent in which the polyurethane is insoluble to perform coagulation may be employed. Meanwhile, in the case of the latter water dispersion method, for example, the above-described web or the like can be immersed in the water-dispersed polyurethane solution and then coagulated by a dry coagulation method or the like. For the drying, heating can be performed at a temperature that does not impair the performance of the web, the sheet substrate, or the polyurethane-attached sheet substrate.

In the step of forming a napped sheet, the napping treatment on at least one surface of the web or the like can be performed using a sandpaper, a roll sander, or the like. Particularly, by using a sandpaper, uniform and dense naps can be formed. Especially, in order to form uniform naps on the surface of the web or the like, it is preferred to reduce the grinding load in the napping treatment. As a specific means for reducing the grinding load, for example, it is a more preferred mode to perform multi-stage buffing in three or more stages using sandpapers in a range of #120 (P120) to #600 (P600) as prescribed in JIS R6010:2000 "Coated abrasive grain sizes" in the respective stages.

Lastly, in the step of performing a post-processing, for example, functional agents, such as a dye, a pigment, a softener, an anti-pilling agent, an antibacterial agent, a deodorant, a water repellent, a light-proofing agent, and a weather-proofing agent, may be incorporated into the web or the like.

For example, the web or the like may be dyed as well. As a specific means for this dyeing, a jet dyeing machine is preferably used since it is capable of dyeing the web or the like and applying a rubbing effect to soften the web or the like simultaneously. The temperature of a dyeing solution used for the dyeing is preferably 100°C to 150°C. As a dye, for example, an acid dye, a metallized dye, or a reactive dye is preferably used. Further, reduction cleaning can also be performed after the dyeing.

For the purpose of improving the dyeing uniformity, it is also preferred to use a dyeing aid at the time of dyeing. Further, a finishing treatment with a softener such as silicone, an antistatic agent, a water repellent, a flame retardant, a light-proofing agent, and the like may be performed as well. This finishing treatment can be performed after the dyeing, or in the same bath with the dyeing.

Alternatively, various processes such as drilling (perforation), embossing, stitching, foil processing, resin printing, ink-jet printing, laser etching, and lamination, may be additionally performed as a part of the post-processing.

### [Vehicle Interior Material and Seat]

The artificial leather of the present invention has a high strength and excellent shape stability; therefore, it can be preferably used in a wide range of applications, including clothing applications, miscellaneous goods applications, shoe and bag applications, and industrial material applications such as vehicle interior materials, seats, CD curtains, DVD curtains, polishing pad substrates, polishing cloths, and wiping cloths.

Thereamong, vehicle interior materials using the above-described artificial leather are particularly preferred since they can take advantage of the properties that achieve an elegant and luxurious appearance and mechanical properties both at high levels while reducing the environmental load. Such vehicle interior materials, for example, steering wheels, horn switches, shift knobs, dashboards, instrument panels, glove boxes, floor carpets, floor mats, ceiling linings, sun visors, and assist grips of automobiles, are more preferably at least partially the above-described artificial leather. The term "vehicle" used herein encompasses not only automobiles, aircrafts, railway vehicles, ships, horse-drawn carriages, baskets, and rickshaws, but also some of industrial machines, construction machines, and agricultural machines that can carry humans and animals, such as excavators, crane trucks, tractors, and combines.

Further, seats using the above-described artificial leather are also particularly preferred in the same manner since they can take advantage of the properties that achieve an elegant and luxurious appearance and mechanical properties both at high levels while reducing the environmental load. In these seats, the skin material of a headrest, a seat surface, an armrest, a footrest, or the like, for example, a part coming into direct contact with a seated person, is more preferably at least partially the above-described artificial leather. It is needless to say that the seat of the present invention can be not only a seat for vehicles such as automobiles, aircrafts, railway vehicles, and ships, but also a seat for households, offices, and stores. The term "seat" used herein also encompasses chairs, benches, sofas, couches, stools, legless chairs, and the like.

### Examples

The present invention will now be described concretely by way of Examples. It is noted here, however, that the present invention is not limited only to the below-described Examples. Unless otherwise specified, the physical properties were measured by the above-described respective methods.

### [Measurement Methods]

### (1) Average Single-Fiber Diameter (µm) of Fibers and Reinforcing Fibers

The average single-fiber diameter (µm) of fibers contained as a main constituent in an artificial leather and that of reinforcing fibers were measured and calculated by the above-described respective methods using a scanning electron microscope "VHX-D510" manufactured by KEYENCE Corporation.

### (2) Dispersion State of Fibers in Artificial Leather

With regard to whether or not fibers are dispersed as single fibers in an artificial leather, regions of 1 cm × 1 cm were randomly selected on the surface of the artificial leather, and evaluation was performed by the above-described method using a scanning electron microscope "VHX-D510" manufactured by KEYENCE Corporation.

### (3) Heat of Fusion ΔHm (J/g) of Artificial Leather, and Half Width (°C) of Melting Peak

The heat of fusion ΔHm (J/g) of an artificial leather was measured and calculated by the above-described method using a differential scanning calorimeter "Q20" manufactured by TA Instruments Japan Inc.

### (4) Content Ratio (% by Mass) of Polyurethane in Artificial Leather

The content ratio of polyurethane in an artificial leather was measured and calculated by the above-described method.

### (5) Cross-Sectional Shape Irregularity (No Unit) of Fibers

The shape irregularity of fibers contained as a main constituent in an artificial leather was measured and calculated by the above-described method using a scanning electron microscope "VHX-D510" manufactured by KEYENCE Corporation.

### (6) Spinning Speed Vs (m/min)

The spinning speed (m/min) in a region below an inlet during the production of an artificial leather was measured and calculated by the above-described method.

### (7) Evaluation of Outer Appearance

For a 10 cm × 10 cm sample of an artificial leather, four panelists evaluated the degree of the unevenness of the outer appearance based on the following five-grade criteria. Thereafter, a total of the points given by the panelists was calculated as an evaluation of the outer appearance of the artificial leather, and a score of 3 or higher was defined as pass. The evaluation of the outer appearance of the artificial leather is preferably a score of 3.5 or higher, more preferably a score of 4 or higher.

5: No unevenness (no variation was observed in fiber density and surface color tone)
4: Favorable unevenness (between the scores of 5 and 3)
3: Average unevenness (variation in fiber density and color tone was observed partially, but in a limited extent)
2: Unfavorable unevenness (between the scores of 3 and 1)
1: Poor unevenness (large variation in fiber density and color tone was observed entirely)

### (8) Evaluation of Texture

For a 10 cm × 10 cm sample of an artificial leather, four panelists evaluated the texture based on the following five-grade criteria. Thereafter, a total of the points given by the panelists was calculated as an evaluation of the texture of the artificial leather, and a score of 3 or higher was defined as pass. The evaluation of the texture of the artificial leather is preferably a score of 3.5 or higher, more preferably a score of 4 or higher.

5: Excellent texture (smooth feel of touch with no unevenness)
4: Favorable texture (between the scores of 5 and 3)
3: Average texture (uneven and non-smooth areas were felt partially, but in a limited extent)
2: Unfavorable texture (between the scores of 3 and 1)
1: Poor texture (many uneven and non-smooth areas were felt entirely)

### (9) Evaluation of abrasion resistance

Using "Model 406" manufactured by James H. Heal & Co. as a Martindale abrasion tester along with "ABRASTIVE CLOTH SM25" manufactured by James H. Heal & Co. as a standard abrasive cloth, a circular artificial leather of 38 mm in diameter was rubbed 20,000 times with a load equivalent to 12 kPa being applied thereto, and the outer appearance of the resulting sample was visually observed and evaluated. As for the evaluation criteria, an evaluation of "pass" was given when the outer appearance of the circular artificial leather of 38 mm in diameter did not change at all from the pre-rubbing state or the number of formed pills was 4 or less, or an evaluation of "fail" was given when the number of formed pills was 5 or more.

### [Example 1]

### (Formation of Web)

A molten polyethylene terephthalate (homopolymer, intrinsic viscosity: 0.65, containing 0.5% by weight of titanium oxide; denoted as "PET" in Tables 1 and 2 and subsequent Tables) was discharged from a spinneret through perfectly circular discharge holes of 0.10 mm in size at a single-hole discharge rate of 0.10 g/min. Subsequently, in a region of 50 mm to 500 mm from the discharge holes, a yarn was formed while blowing a 15°C air to the polyethylene terephthalate at a flow rate of 30.0 m/min, and this yarn was drawn with a 15°C air at a spinning speed of 4,600 m/min in a region below an inlet. In this process, since Vq = 30.0 (m/min) and Vs = 4,600 (m/min), the value of Vq/Vs was 6.5 × 10⁻³. Further, the distance between the discharge holes and the inlet was 700 mm. The thus drawn polyethylene terephthalate was collected on a net conveyer under suction to obtain a web composed of fibers having an average single-fiber diameter of 4.5 µm and a cross-sectional shape irregularity of 1.00. It is noted here that the fibers were in a state of being dispersed as single fibers.

### (Formation of Sheet Substrate)

Next, two layers of the thus obtained web were prepared and, therebetween, a single layer of a woven fabric having an average single-fiber diameter of 15.0 µm was inserted as a layer formed of reinforcing fibers (type of fibers constituting the reinforcing fibers: filament yarns made of polyethylene terephthalate (denoted as "FY" in Table 1), twist count: 2,500 T/m) to obtain a laminated sheet. The front and the back of the thus obtained laminated sheet were alternately treated four times by water jet punching (denoted as "WJP" in Table 1) at a pressure of 10 MPa to obtain a sheet substrate.

### (Formation of Polyurethane-Attached Sheet Substrate)

Thereafter, a water-dispersed polyurethane solution composed of a polyether diol and a diisocyanate (denoted as "liquid A" in Table 1 and subsequent Tables) was prepared, and a polyurethane was added by a dry coagulation method in which the above-obtained web and the like were immersed in the water-dispersed polyurethane solution and then dried at 120°C, whereby a polyurethane-attached sheet substrate having a polyurethane content ratio of 23% by mass was obtained.

### (Formation of Napped Sheet and Post-Processing Step)

Further, one surface of the thus obtained polyurethane-attached sheet substrate was subjected to a napping treatment by grinding with a sandpaper to form naps on the treated surface and, as a post-processing, the thus obtained napped sheet was subsequently dyed with a disperse dye at 130°C using a jet dyeing machine, whereby an artificial leather was obtained. The results thereof are shown in Table 1.

### [Example 2]

An artificial leather was obtained in the same manner as in Example **1,** except that the woven fabric was not laminated in (Formulation of Sheet Substrate). The results thereof are shown in Table 1.

### [Example 3]

An artificial leather was obtained in the same manner as in Example **1,** except that the polyurethane content ratio was changed from 23% by mass to 3% by mass in (Formation of Polyurethane-Attached Sheet Substrate). The results thereof are shown in Table 1.

### [Example 4]

An artificial leather was obtained in the same manner as in Example **1,** except that, in (Formation of Web), the shape of the discharge holes was changed such that the cross-sectional shape irregularity of the fibers was changed from 1.00 to 3.00. The results thereof are shown in Table 1.

### [Example 5]

An artificial leather was obtained in the same manner as in Example **1,** except that a polyethylene terephthalate containing no titanium oxide (denoted as "PET2" in Table 2) was used in (Formation of Web). The results thereof are shown in Table 2.

### [Example 6]

An artificial leather was obtained in the same manner as in Example 5, except that, in (Formation of Web), the polyethylene terephthalate was discharged at a single-hole discharge rate of 0.09 g/min and spun at a spinning speed of 4,000 m/min. The results thereof are shown in Table 2.

### [Example 7]

An artificial leather was obtained in the same manner as in Example 5, except that, in (Formation of Web), the polyethylene terephthalate was discharged at a single-hole discharge rate of 0.07 g/min and spun at a spinning speed of 3,100 m/min. The results thereof are shown in Table 2.

### [Example 8]

An artificial leather was obtained in the same manner as in Example 5, except that, in (Formation of Web), the polyethylene terephthalate was discharged at a single-hole discharge rate of 0.13 g/min and spun at a spinning speed of 6,000 m/min. The results thereof are shown in Table 2.

### [Example 9]

An artificial leather was obtained in the same manner as in Example 5, except that, in (Formation of Web), the polyethylene terephthalate was discharged from a spinneret through perfectly circular discharge holes of 0.20 mm in size and spun. The results thereof are shown in Table 2.

### [Example 10]

An artificial leather was obtained in the same manner as in Example 5, except that, in (Formation of Web), the polyethylene terephthalate was discharged from a spinneret through perfectly circular discharge holes of 0.30 mm in size and spun. The results thereof are shown in Table 2.

### [Example 11]

An artificial leather was obtained in the same manner as in Example 5, except that, in (Formation of Web), a yarn was formed and spun while blowing air in a region of 5 mm to 40 mm from the discharge holes. The results thereof are shown in Table 3.

### [Example 12]

An artificial leather was obtained in the same manner as in Example 5, except that, in (Formation of Web), a yarn was formed and spun while blowing air in a region of 150 mm to 600 mm from the discharge holes. The results thereof are shown in Table 3.

### [Example 13]

An artificial leather was obtained in the same manner as in Example 5, except that, in (Formation of Web), the distance between the discharge holes and the inlet was changed to 1,200 mm to perform spinning. The results thereof are shown in Table 3.

### [Example 14]

An artificial leather that did not contain a polyurethane as a constituent was obtained in the same manner as in Example 5, except that, in (Formation of Sheet Substrate), the water jet punching was performed at a pressure of 25 MPa and a polyurethane was not added. The results thereof are shown in Table 3.

### [Example 15]

An artificial leather having no nap on either surface was obtained in the same manner as in Example 5, except that the napping treatment was not performed in (Formation of Napped Sheet and Post-Processing Step). The results thereof are shown in Table 3.

### [Example 16]

### (Formation of Napped Sheet and Post-Processing Step)

A polyurethane-attached sheet substrate that was obtained in the same manner as in Example 5 was passed through press rolls heated to 90°C to perform a smoothing treatment. Subsequently, an ester-based two-component polyurethane solution was applied to this sheet substrate in an amount of 10 g/m² using a gravure coater and then dried, after which the sheet substrate was embossed at 160°C with an embossing roll having a leather-like grain pattern and subsequently, as a post-processing, dyed with a disperse dye at 130°C using a jet dyeing machine, whereby an artificial leather having no nap on either surface was obtained. The results thereof are shown in Table 3.

### [Comparative Example 1]

An artificial leather was obtained in the same manner as in Example 1, except that, in (Formation of Web), a yarn was formed while blowing a 15°C air to the same polyethylene terephthalate as the one used in Example 1 at a flow rate of 30.0 m/min in a region of 50 mm to 500 mm from the discharge holes, and this yarn was roller-drawn at a spinning speed of 1,600 m/min and then stretched by a factor of 2.9 to produce fibers having an average single-fiber diameter of 4.5 µm and a cross-sectional shape irregularity of 1.00, after which the thus obtained fibers were cut to a fiber length of 5 mm, dispersed in water, and then made into a front layer web and a back layer web by a papermaking method. It is noted here that the fibers were in a state of being dispersed as single fibers. The results thereof are shown in Table 1.

### [Comparative Example 2]

### (Formation of Web)

A polyethylene terephthalate as an island component and a polystyrene (denoted as "PS" in Table 1) as a sea component were each melted in an extruder and weighed such that the mass ratio of the island component and the sea component was 80:20, and sea-island composite fibers were discharged at a single-hole discharge rate of 2.00 g/min from discharge holes of a spinning spinneret capable of forming fibers with a cross-section in which 16 grains of the island component having a uniform cross-sectional area were distributed in the sea component. Subsequently, an air of 15°C or lower was blown to the molten island and sea components at a speed of 0.5 m/sec in a region of 100 to 500 mm from the discharge holes, and the composite fibers were drawn with 15°C air at a spinning speed of 4,600 m/min. In this process, since Vq = 30.0 (m/min) and Vs = 4,600 (m/min), the value of Vq/Vs was 6.5 × 10⁻³. Further, the distance between the discharge holes and the inlet was 700 mm. The thus drawn composite fibers were collected on a net conveyer under suction to obtain a composite fiber web. It is noted here that the fibers were not in a state of being dispersed as single fibers, and many bundled fibers were observed.

### (Formation of Sheet Substrate and Formation of Sea-Removed Sheet)

The composite fiber web was laminated on each of the front and back surfaces of a scrim having a single-fiber diameter of 15 µm, and the resultant was needle-punched to obtain a sheet substrate. The thus obtained sheet substrate was immersed in trichloroethylene to dissolve and remove the sea component, whereby a sea-removed sheet in which nonwoven fabrics composed of fibers having an average single-fiber diameter of 4.5 µm and a cross-sectional shape irregularity of 1.00 were entangled was obtained.

### (Formation of Polyurethane-Attached Sheet Substrate)

To the sea-removed sheet obtained in the above-described manner, the water-dispersed polyurethane solution (liquid A) used in Example 1 was attached by a dipping/nipping method to adhere 3% by mass of a polyurethane resin.

### (Formation of Napped Sheet and Post-Processing Step)

An artificial leather was obtained by performing a napping treatment and a post-processing (dyeing) in the same manner as in Example 1. The results thereof are shown in Table 1.

### [Comparative Example 3]

An artificial leather was obtained in the same manner as in Example **1,** except that, in (Formation of Web), the same polyethylene terephthalate (PET) as the one used in Example 1 was melt-blown with a 320°C hot air at 0.10 MPa to obtain a web composed of fibers having an average single-fiber diameter of 4.5 µm and a cross-sectional shape irregularity of 1.00, and this web was used for a front layer and a back layer. It is noted here that the fibers were in a state of being dispersed as single fibers. The results thereof are shown in Table 2.

**[Table 1]**

| | | | Example 1 | Example 2 | Example 3 | Example 4 | Comparative Example 1 | Comparative Example 2 |
|---|---|---|---|---|---|---|---|---|
| Web | Resin | | PET | PET | PET | PET | PET | PET/PS |
| | Hole Diameter of Spinneret [mm] | | 0.10 | 0.10 | 0.10 | 0.10 | 0.10 | 0.10 |
| | Single-hole Discharge Rate [g/min] | | 0.10 | 0.10 | 0.10 | 0.10 | 0.10 | 2.00 |
| | Region of Blowing Gas | | Distance Region from 50mm to 500mm from Discharge Hole | | | | | |
| | Blown Gas | | Air | Air | Air | Air | Air | Air |
| | Temperature of Blown Gas [°C] | | 15 | 15 | 15 | 15 | 15 | 15 |
| | Gas Velocity Vq [m/min] | | 30.0 | 30.0 | 30.0 | 30.0 | 30.0 | 30.0 |
| | Distance between Discharge Hole and Inlet [mm] | | 700 | 700 | 700 | 700 | - | 700 |
| | Spinning Velocity Vs [m/ 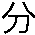 ] | | 4600 | 4600 | 4600 | 4600 | 1600 | 4600 |
| | Vq / Vs [-] | | 6.5x10⁻³ | 6.5x10⁻³ | 6.5x10⁻³ | 6.5x10⁻³ | 18.8x10⁻³ | 6.5x10⁻³ |
| | Drawing Gas | | Air | Air | Air | Air | - | Air |
| | Temperature of Drawing Gas [°C] | | 15 | 15 | 15 | 15 | - | 15 |
| | Fiber | Average Single Fiber Diameter [µm] | 4.5 | 4.5 | 4.5 | 4.5 | 4.5 | 4.5 |
| | | Fiber Length [mm] | >100 | >100 | >100 | >100 | 5 | >100 |
| | | Cross-Sectional Shape Irregularity | 1.00 | 1.00 | 1.00 | 3.00 | 1.00 | 1.00 |
| | | Dispersing State as Single Fibers or Fiber Bundles | Single Fibers | Single Fibers | Single Fibers | Single Fibers | Single Fibers | Fiber Bundles |
| Sheet Substrate | Laminated Number of Web [layers] | | 2 | 2 | 2 | 2 | 2 | 2 |
| | Reinforcing Fiber Layer | Form | Woven Fabric | - | Woven Fabric | Woven Fabric | Woven Fabric | Woven Fabric |
| | | Resin of Constituting Fiber | PET | - | PET | PET | PET | PET |
| | | Form of Constituting Fiber | FY | - | FY | FY | FY | FY |
| | | Average Single Fiber Diameter of Constituting Fiber [µm] | 15.0 | - | 15.0 | 15.0 | 15.0 | 15.0 |
| | | Twist Count [T/m] | 2500 | - | 2500 | 2500 | 2500 | 2500 |
| | | Means/Pressure [MPa] of Entangling with Web | WJP/10 | WJP/10 | WJP/10 | WJP/10 | WJP/10 | Needle |
| Polyurethane Liquid used for Polyurethane-attached Sheet Substrate | | | A Liquid | A Liquid | A Liquid | A Liquid | A Liquid | A Liquid |
| Content Ratio of Polyurethane of Polyurethane-attached Sheet Substrate [mass%] | | | 23 | 23 | 3 | 23 | 23 | 3 |
| Raising Treatment | | | present | present | present | present | present | present |
| Polyurethane Coating on Surface Layer | | | absent | absent | absent | absent | absent | absent |
| Artificial Leather | Melting Heat Quantity [J/g] | | 41 | 38 | 41 | 43 | 51 | 50 |
| | Half Width [°C] | | 14 | 14 | 14 | 14 | 8 | 9 |
| | Appearance Evaluation [point] | | 4.0 | 4.0 | 4.5 | 3.5 | 4.5 | 2.5 |
| | Texture Evaluation [point] | | 4.5 | 4.5 | 5 | 3.5 | 2.5 | 2.5 |
| | Abrasion Resistance Evaluation [pass/fail] | | pass | pass | pass | pass | pass | fail |

As shown in Table 1, in Examples 1 to 4, the outer appearance, the quality, and the abrasion resistance used as a physical property index were all achieved at high levels. On the other hand, in Comparative Examples 1 and 2, the outer appearance and the touch were poor.

**[Table 2]**

| | | | Example 5 | Example 6 | Example 7 | Example 8 | Example 9 | Example 10 | Comparative Example 3 |
|---|---|---|---|---|---|---|---|---|---|
| Web | Resin | | PET2 | PET2 | PET2 | PET2 | PET2 | PET2 | PET |
| | Hole Diameter of Spinneret [mm] | | 0.10 | 0.10 | 0.10 | 0.10 | 0.20 | 0.30 | 0.10 |
| | Single-hole Discharge Rate [g/min] | | 0.10 | 0.09 | 0.07 | 0.13 | 0.10 | 0.10 | *0.20* |
| | Region of Blowing Gas | | Distance Regi on from 50mm to 500mm from Discharge Hole | | | | | | - |
| | Blown Gas | | Air | Air | Air | Air | Air | Air | - |
| | Temperature of Blown Gas [°C] | | 15 | 15 | 15 | 15 | 15 | 15 | - |
| | Gas Velocity Vq [m/min] | | 30.0 | 30.0 | 30.0 | 30.0 | 30.0 | 30.0 | - |
| | Distance between Discharge Hole and Inlet [mm] | | 700 | 700 | 700 | 700 | 700 | 700 | - |
| | Spinning Velocity Vs [m/ 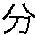 ] | | 4600 | 4000 | 3100 | 6000 | 4600 | 4600 | - |
| | Vq / Vs [-] | | 6.5x10⁻³ | 6.5x10⁻³ | 6.5x10⁻³ | 6.5x10⁻³ | 6.5x10⁻³ | 6.5x10⁻³ | - |
| | Drawing Gas | | Air | Air | Air | Air | Air | Air | - |
| | Temperature of Drawing Gas [°C] | | 15 | 15 | 15 | 15 | 15 | 15 | - |
| | Fiber | Average Single Fiber Diameter [µm] | 4.5 | 4.5 | 4.5 | 4.5 | 4.5 | 4.5 | 4.5 |
| | | Fiber Length [mm] | >100 | >100 | >100 | >100 | >100 | >100 | >100 |
| | | Cross-Sectional Shape Irregularity | 1.00 | 1.00 | 1.00 | 1.00 | 1.00 | 1.00 | 1.00 |
| | | Dispersing State as Single Fibers or Fiber Bundles | Single Fibers | Single Fibers | Single Fibers | Single Fibers | Single Fibers | Single Fibers | Single Fibers |
| Sheet Substrate | Laminated Number of Web [layers] | | 2 | 2 | 2 | 2 | 2 | 2 | 2 |
| | Reinforcing Fiber Layer | Form | Woven Fabric | Woven Fabric | Woven Fabric | Woven Fabric | Woven Fabric | Woven Fabric | Woven Fabric |
| | | Resin of Constituting Fiber | PET | PET | PET | PET | PET | PET | PET |
| | | Form of Constituting Fiber | FY | FY | FY | FY | FY | FY | FY |
| | | Average Single Fiber Diameter of Constituting Fiber [µm] | 15.0 | 15.0 | 15.0 | 15.0 | 15.0 | 15.0 | 15.0 |
| | | Twist Count [T/m] | 2500 | 2500 | 2500 | 2500 | 2500 | 2500 | 2500 |
| | | Means/Pressure [MPa] of Entangling with Web | WJP/10 | WJP/10 | WJP/10 | WJP/10 | WJP/10 | WJP/10 | WJP/10 |
| Polyurethane L quid used for Polyurethane-attached Sheet Substrate | | | A Liquid | A Liquid | A Liquid | A Liquid | A Liquid | A Liquid | A Liquid |
| Content Ratio of Polyurethane of Polyurethane-attached Sheet Substrate [mass%] | | | 23 | 23 | 23 | 23 | 23 | 23 | 23 |
| Raising Treatment | | | present | present | present | present | present | present | present |
| Polyurethane Coating on Surface Layer | | | absent | absent | absent | absent | absent | absent | absent |
| Artificial Leather | Melting Heat Quantity [J/g] | | 36 | 16 | 10 | 58 | 37 | 38 | 51 |
| | Half Width [°C] | | 16 | 10 | 9 | 16 | 16 | 16 | 8 |
| | Appearance Evaluation [point] | | 4.0 | 4.0 | 4.0 | 4.0 | 4.0 | 4.0 | 3.0 |
| | Texture Evaluation [point] | | 4.5 | 4.0 | 4.0 | 4.5 | 4.0 | 4.0 | 2.5 |
| | Abrasion Resistance Evaluation [pass/fail] | | pass | pass | pass | pass | pass | pass | fail |

As shown in Table 2, in Examples 5 to 10, the outer appearance, the quality, and the abrasion resistance used as a physical property index were all achieved at high levels. On the other hand, in Comparative Example 3, the outer appearance, the touch, and the abrasion resistance were all poor.

**[Table 3]**

| | | | Example 11 | Example 12 | Example 13 | Example 14 | Example 15 | Example 16 |
|---|---|---|---|---|---|---|---|---|
| Web | Resin | | PET2 | PET2 | PET2 | PET2 | PET2 | PET2 |
| | Hole Diameter of Spinneret [mm] | | 0.10 | 0.10 | 0.10 | 0.10 | 0.10 | 0.10 |
| | Single-hole Discharge Rate [g/min] | | 0.10 | 0.10 | 0.10 | 0.10 | 0.10 | 0.10 |
| | Region of Blowing Gas | | Distance Region from 5mm to 400mm from Discharge Hole | Distance Region from 150mm to 600mm from Discharge Hole | Distance Region from 50mm to 500mm from Discharge Hole | | | |
| | Blown Gas | | Air | Air | Air | Air | Air | Air |
| | Temperature of Blown Gas [°C] | | 15 | 15 | 15 | 15 | 15 | 15 |
| | Gas Velocity Vq [m/min] | | 30.0 | 30.0 | 30.0 | 30.0 | 30.0 | 30.0 |
| | Distance between Discharge Hole and Inlet [mm] | | 700 | 700 | 1200 | 700 | 700 | 700 |
| | Spinning Velocity Vs [m/ 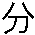 ] | | 4600 | 4600 | 4600 | 4600 | 4600 | 4600 |
| | Vq / Vs [-] | | 6.5x10⁻³ | 6.5x10⁻³ | 6.5x10⁻³ | 6.5x10⁻³ | 6.5x10⁻³ | 6.5x10⁻³ |
| | Drawing Gas | | Air | Air | Air | Air | Air | Air |
| | Temperature of Drawing Gas [°C] | | 15 | 15 | 15 | 15 | 15 | 15 |
| | Fiber | Average Single Fiber Diameter [µm] | 4.5 | 4.5 | 4.5 | 4.5 | 4.5 | 4.5 |
| | | Fiber Length [mm] | >100 | >100 | >100 | >100 | >100 | >100 |
| | | Cross-Sectional Shape Irregularity | 1.00 | 1.00 | 1.00 | 1.00 | 1.00 | 1.00 |
| | | Dispersing State as Single Fibers or Fiber Bundles | Single Fibers | Single Fibers | Single Fibers | Single Fibers | Single Fibers | Single Fibers |
| Sheet Substrate | Laminated Number of Web [layers] | | 2 | 2 | 2 | 2 | 2 | 2 |
| | Reinforcing Fiber Layer | Form | Woven Fabric | Woven Fabric | Woven Fabric | Woven Fabric | Woven Fabric | Woven Fabric |
| | | Resin of Constituting Fiber | PET | PET | PET | PET | PET | PET |
| | | Form of Constituting Fiber | FY | FY | FY | FY | FY | FY |
| | | Average Single Fiber Diameter of Constituting Fiber [µm] | 15.0 | 15.0 | 15.0 | 15.0 | 15.0 | 15.0 |
| | | Twist Count [T/m] | 2500 | 2500 | 2500 | 2500 | 2500 | 2500 |
| | | Means/Pressure [MPa] of Entangling with Web | WJP/10 | WJP/10 | WJP/10 | WJP/25 | WJP/10 | WJP/10 |
| Polyurethane Liquid used for Polyurethane-attached Sheet Substrate | | | A Liquid | A Liquid | A Liquid | absent | A Liquid | A Liquid |
| Content Ratio of Polyurethane of Polyurethane-attached Sheet Substrate [mass%] | | | 23 | 23 | 23 | 0 | 23 | 23 |
| Raising Treatment | | | present | present | present | present | absent | absent |
| Polyurethane Coating on Surface Layer | | | absent | absent | absent | absent | absent | present |
| Artificial Leather | Melting Heat Quantity [J/g] | | 37 | 35 | 36 | 36 | 36 | 36 |
| | Half Width [°C] | | 20 | 15 | 16 | 16 | 16 | 16 |
| | Appearance Evaluation [point] | | 4.0 | 4.0 | 4.0 | 4.5 | 4.0 | 4.5 |
| | Texture Evaluation [point] | | 4.5 | 4.0 | 4.0 | 4.0 | 4.0 | 4.5 |
| | Abrasion Resistance Evaluation [pass/fail] | | pass | pass | pass | pass | pass | pass |

As shown in Table 3, in Examples 11 to 16, the outer appearance, the quality, and the abrasion resistance used as a physical property index were all achieved at high levels.

### Description of Symbols

1: discharge hole
2: arrow indicating blowing of gas
3: arrow indicating drawing with gas
4: distance from discharge holes to gas-blowing position
5: distance from discharge holes to inlet
6: hopper
7: extruder
8: gear pump
9: spinneret
10: gas supply means
11: yarn
12: drawing means
13: web
14: transfer means

## Claims

1. An artificial leather, comprising, as a main constituent, fibers that are composed of a polyester resin and have an average single-fiber diameter of 2.0 µm to 7.0 µm,
wherein
the fibers are long fibers and dispersed as single fibers, and
the artificial leather has a heat of fusion ΔHm of 10 J/g to 100 J/g, and exhibits a melting peak with a half width of 9°C or more.

2. The artificial leather according to claim 1, having naps on at least one surface.

3. The artificial leather according to claim 1 or 2, further comprising, as a constituent, a layer formed of reinforcing fibers having an average single-fiber diameter of 5.0 µm to 25.0 µm.

4. The artificial leather according to claim 1 or 2, further comprising a polyurethane as a constituent,
wherein a content ratio of the polyurethane is 5% by mass to 50% by mass.

5. The artificial leather according to claim 1 or 2, wherein the fibers have a cross-sectional shape irregularity of 1.00 to 1.15.

6. A method of producing the artificial leather according to claim **1,** the method comprising the steps of:
discharging a molten polyester resin from discharge holes of a spinneret at a single-hole discharge rate of 0.05 g/min to 0.30 g/min, and subsequently blowing a - 15°C to 50°C gas to the polyester resin in at least a part of a region within 200 mm from the discharge holes to form a yarn; and
drawing the yarn with a -15°C to 50°C gas at a spinning speed Vs (m/min) of 3,000 m/min to 7,000 m/min at least at an inlet to obtain a web composed of fibers having an average single-fiber diameter of 2.0 µm to 7.0 µm.

7. The method according to claim 6, wherein a ratio Vq/Vs between a gas flow rate Vq (m/min) at the time of blowing the gas and the spinning speed Vs (m/min) is 3 × 10⁻³ to 30 × 10⁻³.

8. The method according to claim 6 or 7, wherein the distance between the discharge holes and the inlet is 100 mm to 3,000 mm.

9. The method according to claim 6 or 7, wherein the discharge holes have a hole diameter of 0.05 mm to 0.30 mm.

10. A vehicle interior material, comprising the artificial leather according to claim 1.

11. A seat, comprising the artificial leather according to claim 1.
